# EUROPEAN PATENT APPLICATION

(11) **EP 4 726 240 A1**
(43) Date of publication of application: **15.04.2026**
(21) Application number: 24818999.5
(22) Date of filing: 26.03.2024
(51) Int. Cl.: F16K 3/28, F16K 3/00

(54) **VALVE DEVICE, METHOD FOR CONSTRUCTING VALVE DEVICE, AND METHOD FOR ASSEMBLING VALVE DEVICE**

(30) Priority: 09.06.2023 JP 2023095349
(71) Applicant: Waterworks Technology Development Organization Co., Ltd., Osaka-shi, Osaka 530-0001 (JP)
(72) Inventor: SHIMADA,Kazuhiro, Osaka-shi, Osaka 530-0001 (JP)
(74) Representative: Meissner Bolte Partnerschaft mbB
(86) International application number: PCT/JP2024/011974
(87) International publication number: WO 2024/252760

(57) **Abstract**

A valve body (3) of a valve device (1) has a first sealing member (5) has a first sealing portion (50) for sealing an edge of the through-hole (K1) and a second sealing portion (51) that is deformable in an expansion direction (D3); a support member (6) supports the first sealing member (5), and a moving member (8) is movable relative to the support member (6) in the insertion direction (D2) of the valve body (3). By the moving member (8) moving relative to the support member (6) in the insertion direction (D2) of the valve body (3), the moving member (8) presses against the second sealing portion (51), thus causing the second sealing portion (51) to deform in the expansion direction (D3), A communicating channel (53) that connects upstream and downstream of the valve body (3) is formed in the insertion direction (D2) of the valve body (3) within the first sealing member (5), The communicating channel (53) is closed by the moving member (8) moving relative to the support member (6 in the insertion direction (D2) of the valve body (3).

## Description

### TECHNICAL FIELD

The invention relates to a valve device for use in a fluid pipe such as a water pipe, a method for installing a valve device, and a method for assembling a valve device.

### BACKGROUND ART

As an example of a valve device for use in existing a fluid pipe such as a water pipe, a valve device is disclosed that opens and closes the fluid pipe passage by inserting or withdrawing a valve body into the fluid pipe through a through-hole formed in the fluid pipe. The valve body has a support member capable of moving along the insertion direction (downward) of the valve body, and a sealing member supported by the support member. The sealing member has an annular first sealing portion for sealing a through-hole, and a U-shaped second sealing portion capable of deforming radially outward from the pipe radial direction of the fluid pipe to seal the inner wall of the fluid pipe.

Regarding the valve body's closing operation, the following description is given: The support member moves downward, pressing the sealing member against the inner wall at the bottom of the fluid pipe. Furthermore, when the support member is forced downward, the U-shaped second sealing portion is compressed vertically. Consequently, both sides of the second sealing portion are forced to expand laterally (in pipe radial direction of the fluid pipe), causing the second sealing portion to seal against the inner wall of the fluid pipe.

### PRIOR ART DOCUMENTS

### PATENT DOCUMENT

Patent Document 1: JP 06 - 159 526 A

### SUMMARY OF THE INVENTION

### PROBLEMS TO BE SOLVED BY THE INVENTION

As described above, to accurately seal the inner wall of the fluid pipe at the second sealing portion, it is necessary to appropriately deform the second sealing portion outward in the pipe radial direction of the fluid pipe. Utilizing the force advancing in the direction of insertion of the valve body may make it difficult to deform the second sealing portion outward in the pipe radial direction of the fluid pipe. Furthermore, the force required to deform the second sealing portion for sealing may be affected by water pressure, and it may be difficult to deform the second sealing portion in the pipe radial direction from the fluid pipe.

This invention provides a valve device, a method for installing a valve device, and a method for assembling a valve device, which are capable of appropriately deforming a sealing member.

### MEANS FOR SOLVING THE PROBLEMS

According of the present invention, there is provided a valve device having: a valve body that is insertable into a fluid pipe through a through-hole formed in the fluid pipe, wherein the valve body having: a first sealing member has a first sealing portion for sealing an edge of the through-hole and a second sealing portion that is deformable in an expansion direction for sealing an inner wall of the fluid pipe, wherein the expansion direction is perpendicular to an insertion direction of the valve body and is directed outward in a pipe radial direction of the fluid pipe; a support member supports the first sealing member, and a moving member is movable relative to the support member in the insertion direction of the valve body, wherein by the moving member moving relative to the support member in the insertion direction of the valve body, the moving member presses against the second sealing portion, thus causing the second sealing portion to deform in the expansion direction, a communicating channel that connects upstream and downstream of the valve body is formed in the insertion direction of the valve body within the first sealing member, the communicating channel is closed by the moving member moving relative to the support member in the insertion direction of the valve body.

### BRIEF DESCRIPTION OF THE DRAWINGS

FIG. 1 is a partially sectional view of the valve device 1 provided in the fluid pipe K of the first embodiment, as seen from a view parallel to the pipe axial direction D1.
FIG. 2 is a partially sectioned side view of the valve device 1 provided in the fluid pipe K of the first embodiment.
FIG. 3 is a partially sectional view through the center of the valve body, as seen in a view parallel to the pipe axial direction, showing the valve device 1 provided in the fluid pipe K of the first embodiment.
FIG. 4 is an isometric view showing the assembly of the first sealing member 5, support member 6, second sealing member 7, moving member 8, and fixing member 9 that constitute the valve body 3.
FIG. 5 is a plan view, as seen from a perspective parallel to the insertion direction of the valve body, showing the assembly of the first sealing member 5, support member 6, second sealing member 7, moving member 8, and fixing member 9 that constitute the valve body 3.
FIG. 6 is a front view, as seen from a perspective parallel to the pipe axial direction of the fluid pipe, showing the assembly of the first sealing member 5, support member 6, second sealing member 7, moving member 8, and fixing member 9 that constitute the valve body 3.
FIG. 7 is a side view showing the assembly of the first sealing member 5, support member 6, second sealing member 7, moving member 8, and fixing member 9 that constitute the valve body 3.
FIG. 8 is a bottom view showing the assembly of the first sealing member 5, support member 6, second sealing member 7, moving member 8, and fixing member 9 that constitute the valve body 3.
FIG. 9 is a cross-sectional view corresponding to FIG. 3, showing the insertion process of valve body 3.
FIG. 10 is a cross-sectional view corresponding to FIG. 3, showing the insertion process of the valve body 3.
FIG. 11 is a cross-sectional view corresponding to FIG. 3, showing the insertion process of the valve body 3.
FIG. 12 is a cross-sectional view corresponding to FIG. 10 for the second embodiment.
FIG. 13 is a cross-sectional view showing the valve body 3 of the modified example, taken along the insertion direction of the valve body 3 and the pipe axial direction D1 of the fluid pipe K.

### MODE FOR CARRYING OUT THE INVENTION

### <First embodiment>

A valve device 1 used in the fluid pipe K, a method of installing a valve device 1, and a method of assembling a valve device 1, according to the first embodiment of the present invention, will be disclosed below.

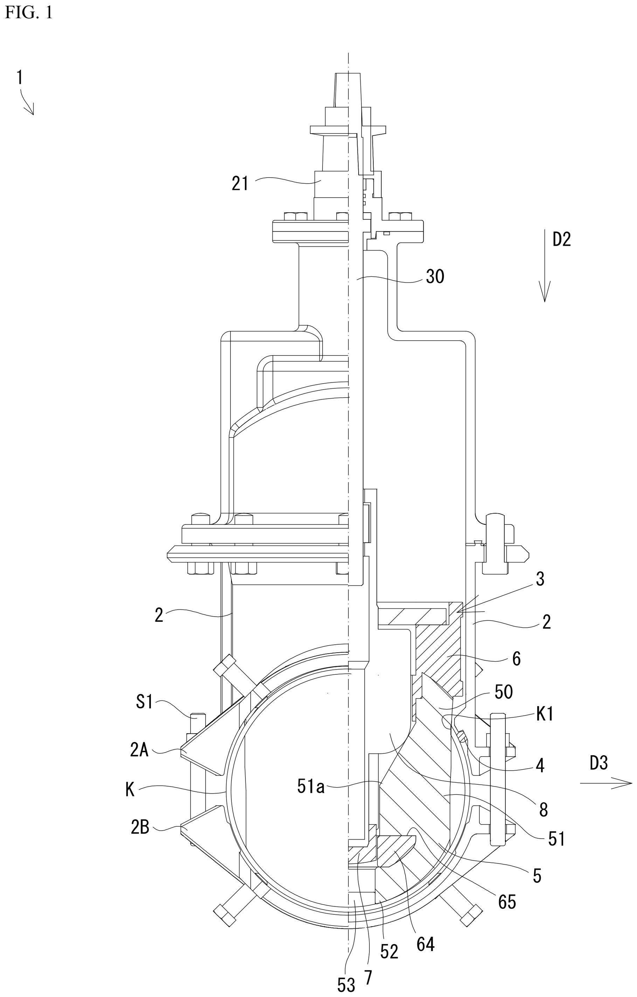

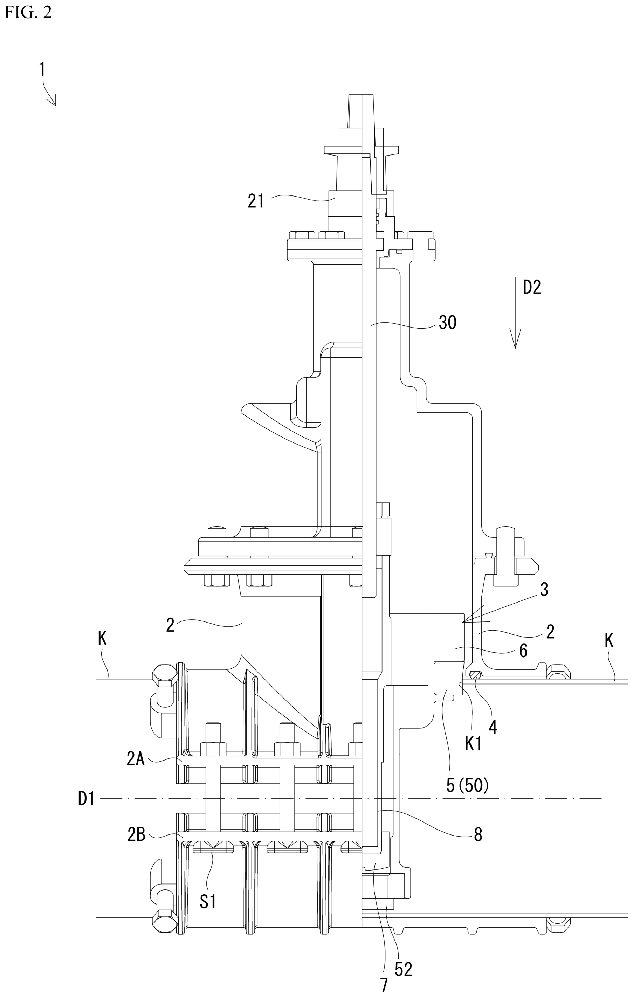

As illustrated in FIGS. 1 and 2, a valve device 1 has a valve housing 2 mountable on the fluid pipe K of an existing pipe (water pipe), a valve body 3 housed within the valve housing 2, and a valve housing packing 4 sealing the gap between the inner surface of the valve housing 2 and the outer peripheral surface of the fluid pipe K. A through-hole K1 is formed in the fluid pipe K using a perforating device without interrupting fluid flow, the valve body 3 is inserted into the fluid pipe K through the through-hole K1, and the valve device 1 is installed in the fluid pipe K. The through-hole K1 is smaller than the inner diameter of the fluid pipe K.

A valve housing 2 is formed of metal material and is a split T-shaped pipe externally fitted to fluid pipe K, watertightly enclosing the outer peripheral surface of fluid pipe K at a predetermined location. Furthermore, the valve housing 2 has a twopiece structure, consisting of an upper member 2A and a lower member 2B. The upper member 2A and lower member 2B are joined at the end of the fluid pipe K in the pipe circumferential direction by the fastener S1. In the first embodiment, fastener S1 is configured to include a bolt and nut; however, welding may be used instead.

The valve housing packing 4 is formed from an elastic material such as rubber, and is annularly arranged between the upper member 2A and the outer peripheral surface of the fluid pipe K, at a position surrounding the through-hole K1 formed in the fluid pipe K.

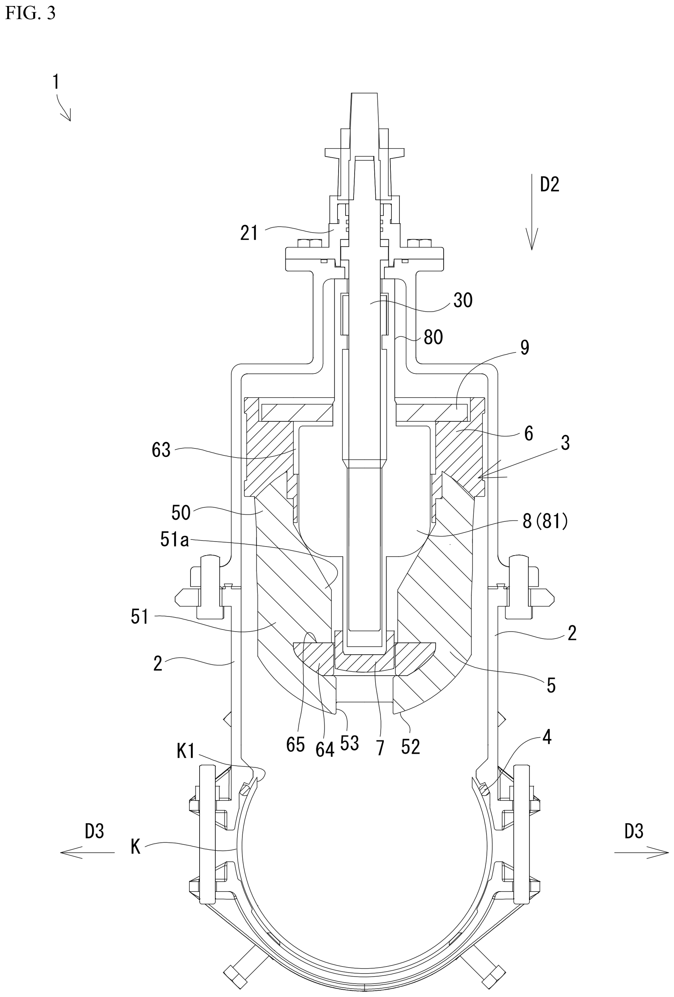

The valve body 3 is configured to rise and fall freely in response to operation of the valve shaft 30, blocking the flow path of water flowing within the fluid pipe K. FIG. 3 illustrates the state where the valve body 3 has risen and is in the open position. The flow path is blocked when the valve body 3 descends and moves to the closed position. The upper part of the valve housing 2 is closed off by the valve cover 21, and the valve shaft 30 is supported by the valve cover 21.

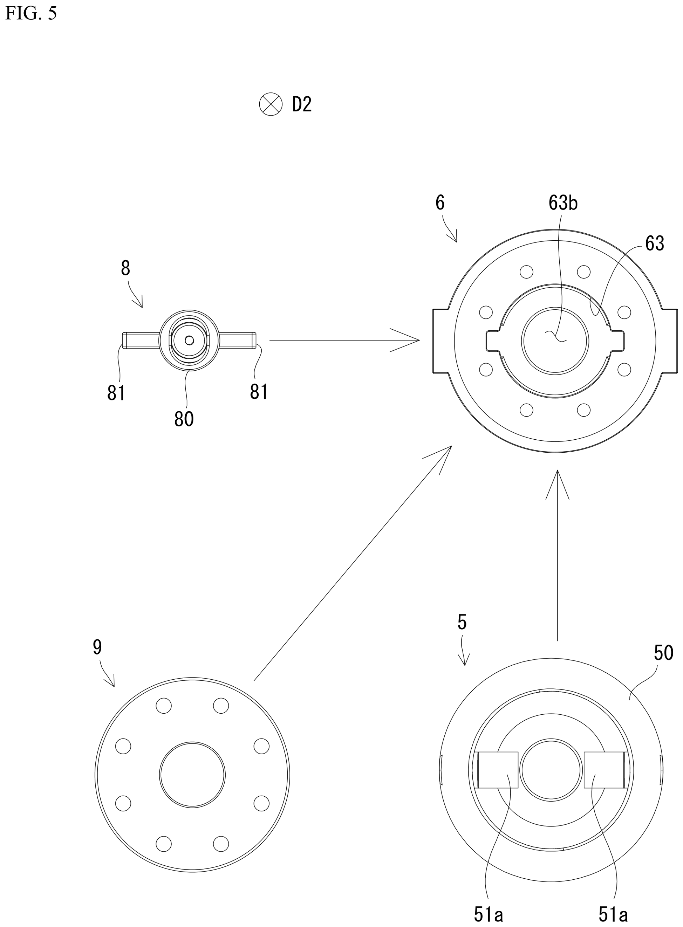

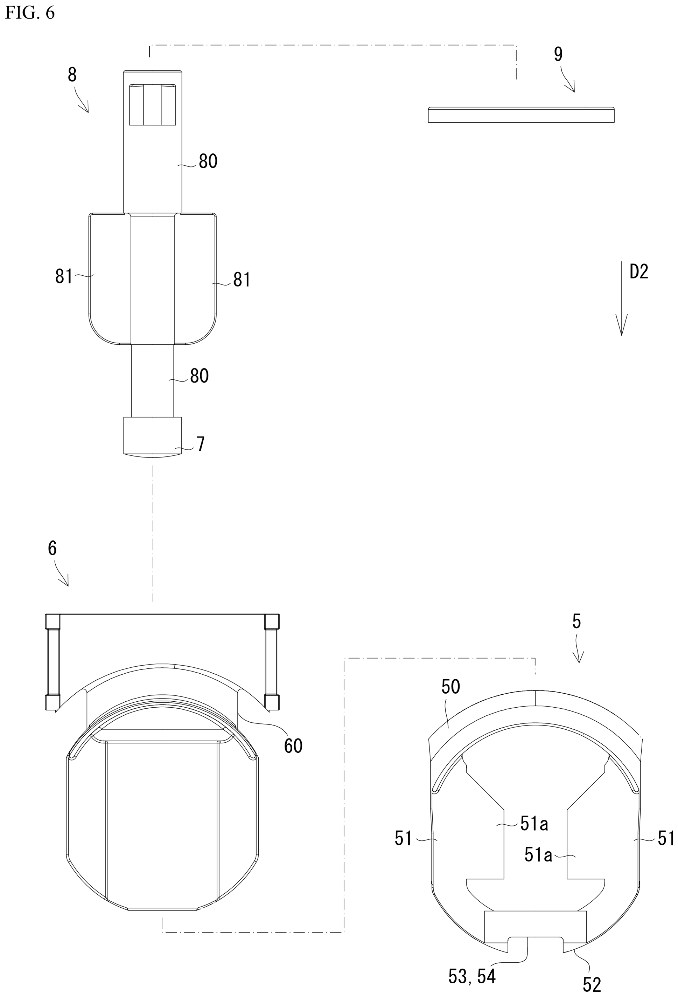

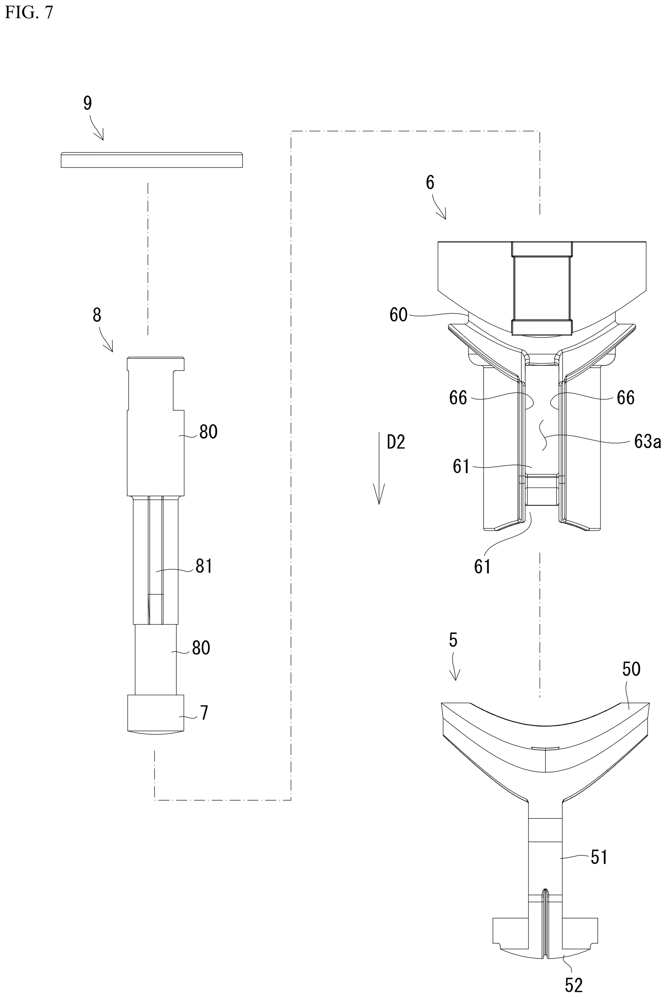

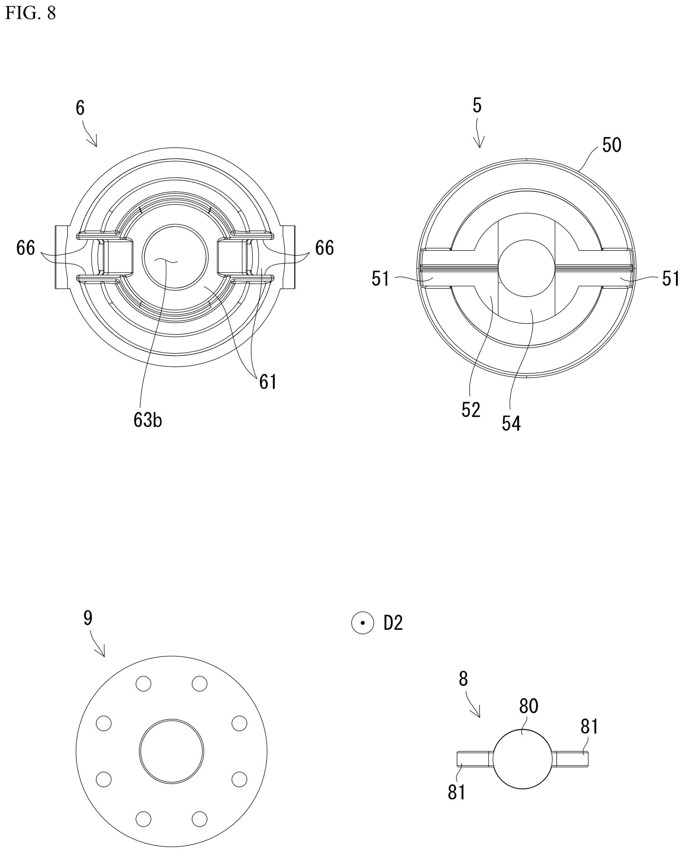

As illustrated in FIGS. 1 to 8, the valve body 3 comprises a first sealing member 5, a support member 6, a second sealing member 7, a moving member 8, and a fixing member 9. The first sealing member 5 and the second sealing member 7 are formed from an elastic material such as rubber. The support member 6, the moving member 8, and the fixing member 9 are formed from a metal material.

A support member 6 supports a first sealing member 5. A moving member 8 is inserted into the support member 6 and is a member capable of moving relative to the support member 6 in the insertion direction D2 of the valve body 3. In the first embodiment, the moving member 8 has a rod-shaped portion 80 and a pair of protruding pieces 81 extending outward in the radial direction from the rod-shaped portion 80. The pair of protruding pieces 81 is provided to press the second sealing portion 51, described later, from the inside. The base end (upper end; the end opposite the insertion direction D2 of the valve body 3) of the rod-shaped portion 80 is connected to the valve shaft 30.

Rotation of the threaded valve shaft 30 causes the screw nut to engage, enabling the moving member 8 to rise and fall. A second sealing member 7 is provided at the tip end (lower end; end in the insertion direction D2 of the valve body 3) of the rod-shaped portion 80. The second sealing member 7 is a sealing member provided separately from the first sealing member 5 and is formed in a circular shape when viewed along a line parallel to the insertion direction D2 of the valve body 3.

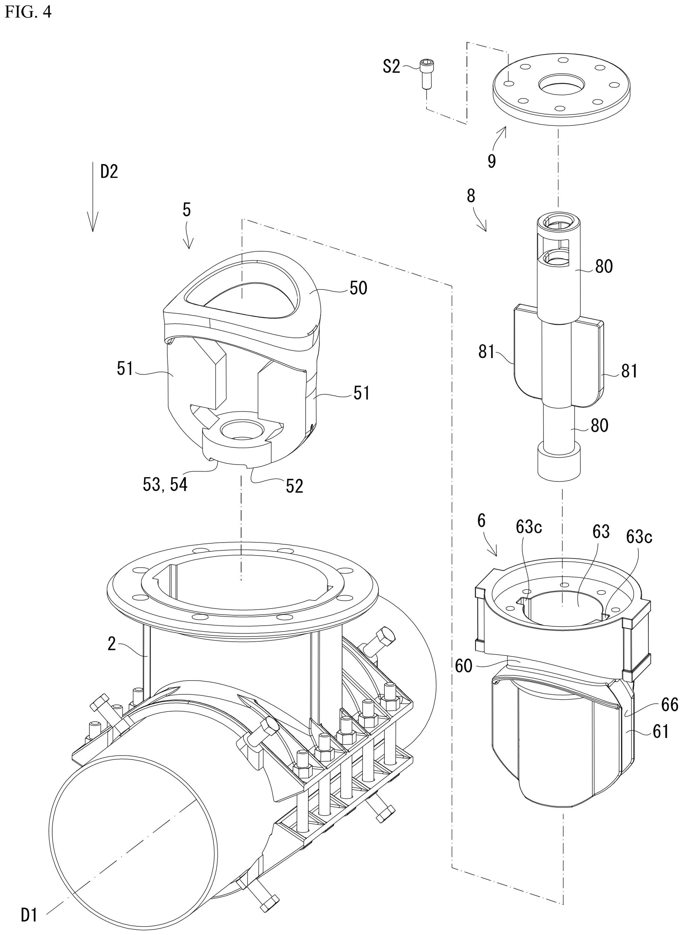

The fixing member 9 is a component that prevents the moving member 8 from being pulled out of the support member 6, and blocks a part of the housing chamber 63 of the support member 6 into which the moving member 8 is inserted (see FIG. 4). In the first embodiment, the fixing member 9 is fixed to the support member 6 using fasteners S2 such as bolts; however, the method for fixing the fixing member 9 to the support member 6 can be appropriately modified.

The first sealing member 5 has a first sealing portion 50 for sealing the edge of the through-hole K1. The first sealing portion 50 has an annular portion extending along the edge of the through-hole K1. The annular portion serving as the first sealing portion 50 is formed larger than the through-hole K1. By forcing insertion of the annular portion serving as the first sealing portion 50 into the through-hole K1, the first sealing portion 50 deforms and adheres closely to the edge of the through-hole K1.

The first sealing member 5 has a second sealing portion 51 that is deformable in the expansion direction D3 to seal the inner wall of the fluid pipe K in the expansion direction D3. The expansion direction D3 is perpendicular to the insertion direction D2 of the valve body 3 and extends outward in the pipe radial direction of the fluid pipe K. The second sealing portion 51 bulges (deforms) in the expansion direction D3 when pressed by the moving member 8, becoming larger than the inner diameter of the through-hole K1, thereby closely adhering to the inner wall of the fluid pipe K in the expansion direction D3.

In the first embodiment, the first sealing member 5 has a U-shaped portion connected to an annular portion. Specifically, it has a pair of extension portions extending downward (in the insertion direction D2 of the valve body 3) from the annular portion, with the lower ends of the pair of extension portions connected to form the U-shaped portion. In the first embodiment, the second sealing portion 51 is provided on the lateral portion of the U-shaped portion.

The first sealing member 5 has a third sealing portion 52 for sealing the inner wall in the insertion direction D2 of the valve body 3 within the fluid pipe K. The third sealing portion 52 is provided at the bottom of the U-shaped portion of the first sealing member 5 (the end in the insertion direction D2 of the valve body 3). The third sealing portion 52 is pressed in the insertion direction D2 of the valve body 3 by the pressing portion 64 (described later) of the support member 6, thereby sealing against the inner wall of the fluid pipe K in the insertion direction D2 of the valve body 3.

Among the first sealing member 5, the first sealing portion 50 is the softest. This is because the first sealing portion 50 must adhere to the edge of the through-hole K1 when pressed into it, requiring the first sealing portion 50 to be relatively soft (low rubber hardness). In contrast, the second sealing portion 51 must deform in the expansion direction D3 when pressed by the moving member 8 to adhere to the inner wall of the fluid pipe K.

If the rubber is too soft, it may yield to water pressure and fail to adhere to the inner wall of the fluid pipe K. Therefore, at least part of the second sealing portion 51 is harder than the first sealing portion 50. In the first embodiment, the first sealing member 5 is rubber, with the first sealing member 5 having a soft rubber upper portion and a hard rubber lower portion. The interface between the upper and lower rubber portions passes through the second sealing portion 51, but this can be appropriately modified.

The support member 6 includes a first groove 60 formed in a annular shape to accommodate a part of the annular section of the first sealing member 5, and a second groove 61 that accommodates a part of the U-shaped section of the first sealing member 5. The first groove 60 is formed on the outer periphery of support member 6 to be annular about the valve body axis, which is parallel to the insertion direction D2 of the valve body 3. The second groove 61 is formed between a pair of side portions and the bottom of the support member 6.

Support member 6 has an internal housing chamber 63 for accommodating the moving member 8 described later. The housing chamber 63 has dimensions that allow the moving member 8 to move in the insertion direction D2 of the valve body 3. The housing chamber 63 has a pair of first openings 63a opening in the expansion direction D3 and a second opening 63b opening downward (in the insertion direction D2 of the valve body 3). The pair of first openings 63a and second openings 63b each communicate with the second groove 61.

As illustrated in FIGS. 3 and 9 to 11, when the U-shaped portion of the first sealing member 5 is housed in the second groove 61, the inner portion 51a of the second sealing portion 51 extends from the radial outward side of the valve body 3 toward the inner side, reaching the housing chamber 63. Viewed along a line parallel to the insertion direction D2 of the valve body 3, and in a natural state where no external force is applied, the inner portion 51a of the second sealing portion 51 is positioned to overlap with the moving member 8. The inner portion 51a of the second sealing portion 51 slopes inward from the radially outward side of the valve body 3 toward the insertion direction D2 (from top to bottom).

Consequently, without the support member 6 moving, the movement of the moving member 8 in the insertion direction D2 of the valve body 3 causes the pair of protruding pieces 81 of the moving member 8 to contact the inner portion 51a of the second sealing portion 51, pressing the moving member 8 against the second sealing portion 51 in the expansion direction D3. As a result, the second sealing portion 51 deforms in the expansion direction D3.

Support member 6 has a pressing portion 64 that presses third sealing portion 52 in the insertion direction D2 (downward) of valve body 3. Opposite the insertion direction D2 of valve body 3 at pressing portion 64, a first restriction surface 65 is provided. The first restriction surface 65 contacts the inner portion 51a of the second sealing portion 51, restricting the movement of the inner portion 51a of the second sealing portion 51, which is pressed by the moving member 8, in the insertion direction D2 of the valve body 3.

Specifically, it is preferable that the first restriction surface 65 is positioned such that, when viewed along a line parallel to the insertion direction D2 of the valve body 3, it overlaps both the inner portion 51a of the second sealing portion 51 and the moving member 8. This is because it can appropriately receive the inner portion 51a of the second sealing portion 51 being pressed in the insertion direction D2 of the valve body 3.

The tip portion (third sealing portion 52) of the first sealing member 5 is fixed to the pressing portion 64 of the support member 6. Any fixing means, such as bolt fixing or adhesive fixing, can be adopted for fixing the third sealing portion 52 to the pressing portion 64. For example, in the case of bolt fastening, the bolt protruding upward from the annular portion constituting the third sealing portion 52 can be fixed by means such as adhesive bonding or interference fit. A bolt hole penetrating vertically through the pressing portion 64 is opened, and the upward-projecting bolt of the third sealing portion 52 is passed through the bolt hole in the pressing portion 64 from below to secure it.

The lower end portion (third sealing portion 52) of the U-shaped section of the first sealing member 5 in the first embodiment is susceptible to the pressure of fluid flowing from upstream to downstream in the fluid pipe K during opening and closing of the valve body 3, making the lower end portion (third sealing portion 52) of the first sealing member 5 prone to detachment from the support member 6. Fixing the third sealing portion 52 to the pressing portion 64 of the support member 6 can suppress or prevent this detachment.

A pair of first openings 63a in the support member 6 accommodate a part of the second sealing portion 51. The support member 6 has a pair of second restriction surfaces 66 (see Figures 4, 7, and 8). The pair of second restriction surfaces 66 sandwich at least a part of the second sealing portion 51 positioned in the pair of first openings 63a from both the upstream and downstream sides of the valve body 3.

The pair of second restriction surfaces 66 restricts deformation of the second sealing portion 51 toward both the upstream and downstream sides of the valve body 3. This facilitates deformation of the second sealing portion 51 toward the outer side (expansion direction D3) in the pipe radial direction of the fluid pipe K.

In the first sealing member 5, a communicating channel 53 connecting the upstream and downstream sides of the valve body 3 is formed in the insertion direction D2 of the valve body 3. This communicating channel 53 is blocked when the moving member 8 moves relative to the support member 6 in the insertion direction D2 of the valve body 3. In the first embodiment, a third opening 54 is formed at the end of the insertion direction D2 of the valve body 3 in the first sealing member 5. This third opening 54 opens in three directions: upstream and downstream of the valve body 3 and along the insertion direction D2 of the valve body 3.

The third opening 54 forms the communicating channel 53. The third opening 54 in the first sealing member 5 communicates with the second opening 63b in the support member 6. As the moving member 8 moves in the insertion direction D2 of the valve body 3, the second sealing member 7, provided at the tip of the rod-shaped portion 80 of the moving member 8, advances within the third opening 54 and the second opening 63b. The second sealing member 7 then adheres to the inner wall of the fluid pipe K in the insertion direction D2 of the valve body 3, thereby closing the communicating channel 53.

### <Method for assembling a valve device>

As illustrated in FIG. 4, the support member 6 is inserted into the first sealing member 5, thereby supporting the first sealing member 5 on the support member 6. Next, the moving member 8 is inserted into the interior (housing chamber 63) of the support member 6. The pair of protruding pieces 81 of the moving member 8 are fitted into the pair of slits 63c within the housing chamber 63. The pair of slits 63c allows the moving member 8 to slide relative to the support member 6 without rotating. Next, a fastener S2 is used to attach the fixing member 9 to the support member 6, preventing the moving member 8 from being pulled out of the support member 6. This completes the valve body 3 of the valve device 1.

### <Water shut-off mechanism for a valve device (Construction method)>

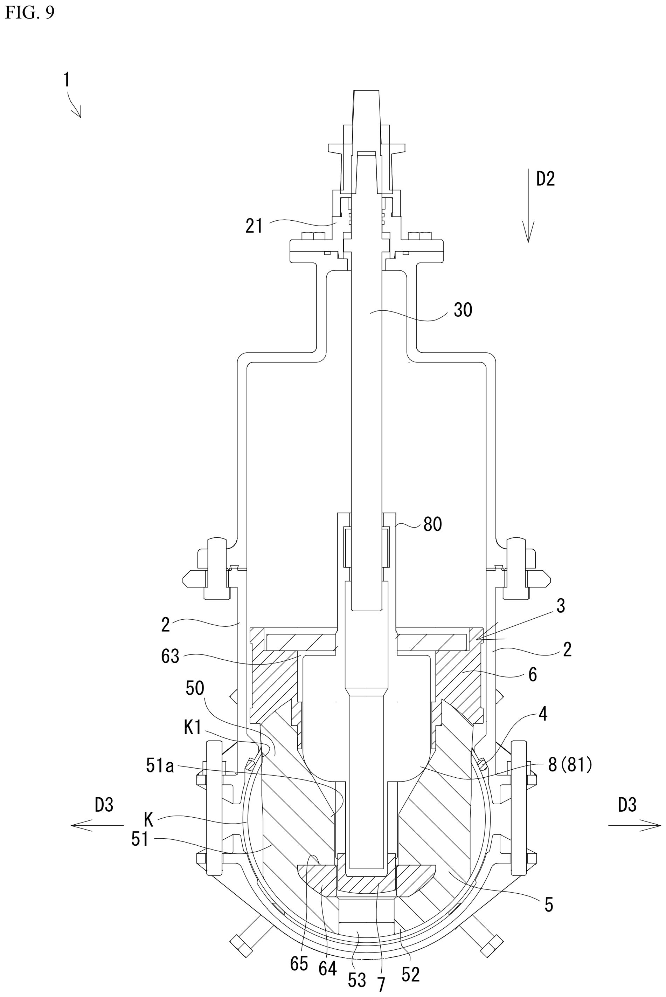

The valve body 3 assembled using the above method for assembling the valve device , as illustrated in FIG. 3, is inserted into the fluid pipe K, and as illustrated in FIG. 9, the first sealing portion 50 is brought into close contact with the edge of the through-hole K1. Continuing to operate the valve shaft 30 causes the moving member 8 to advance further in the insertion direction D2 of the valve body 3. The moving member 8 presses against the first sealing member 5 and the support member 6, forcing the third sealing portion 52 against the bottom wall of the fluid pipe K. At this time, the fluid pipe K is not closed , and the two lateral gaps of the second sealing portion 51 and the communicating channel 53 are open, so the fluid flow is not stopped.

Continuing to operate the valve shaft 30 causes the moving member 8 to move downward relative to the support member 6 while the support member 6 remains stationary. The moving member 8 presses the inner portion 51a of the second sealing portion 51 in the expansion direction D3 and the insertion direction D2 of the valve body 3. Movement of the inner portion 51a of the second sealing portion 51 in the insertion direction D2 of the valve body 3 is restricted by the first restriction surface 65 of the pressing portion 64 of the support member 6.

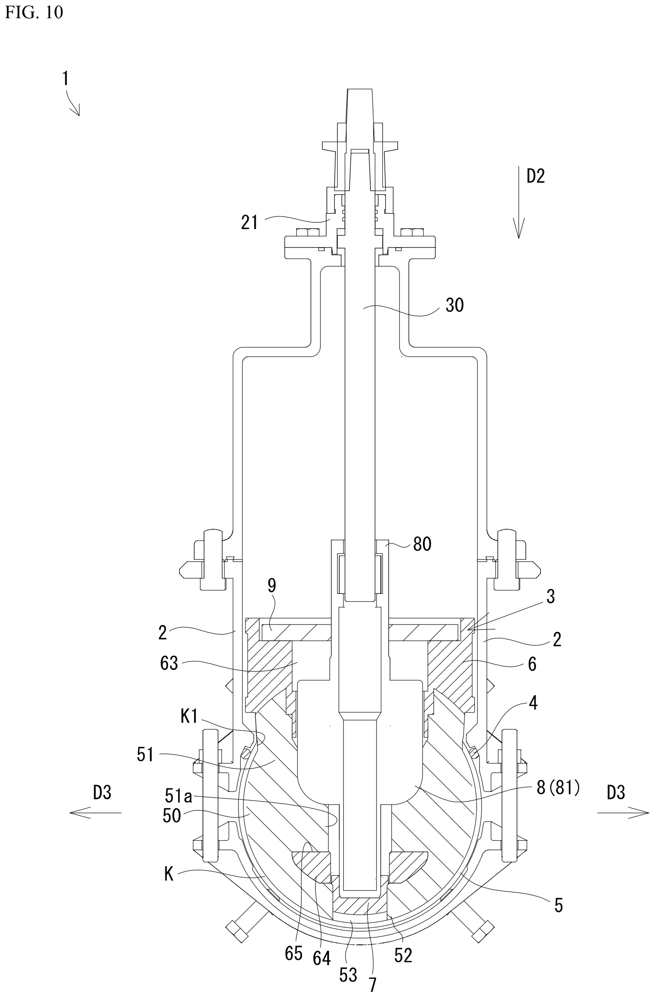

Furthermore, the inner portion 51a of the second sealing portion 51 is sandwiched from both upstream and downstream of the valve body 3 by a pair of second restriction surfaces 66. Therefore, the second sealing portion 51 readily deforms in the expansion direction D3. As illustrated in FIG. 10, the second sealing portion 51 deforms in the expansion direction D3, closing the gap that existed on the side of the valve body 3.

At this time, the communicating channel 53 is in an open state. If the communicating channel 53 were already closed when the gap is blocked by the second sealing portion 51, the second sealing portion 51 would need to deform against the fluid pressure, potentially requiring excessive operating force on the valve shaft 30 or failing to properly close the gap. However, by keeping the communicating channel 53 open until the gap is completely closed by the second sealing portion 51, the gap closure by the second sealing portion 51 can be performed appropriately. The timing at which the communicating channel 53 is closed can be adjusted by the length of the rod-shaped portion 80 of the moving member 8.

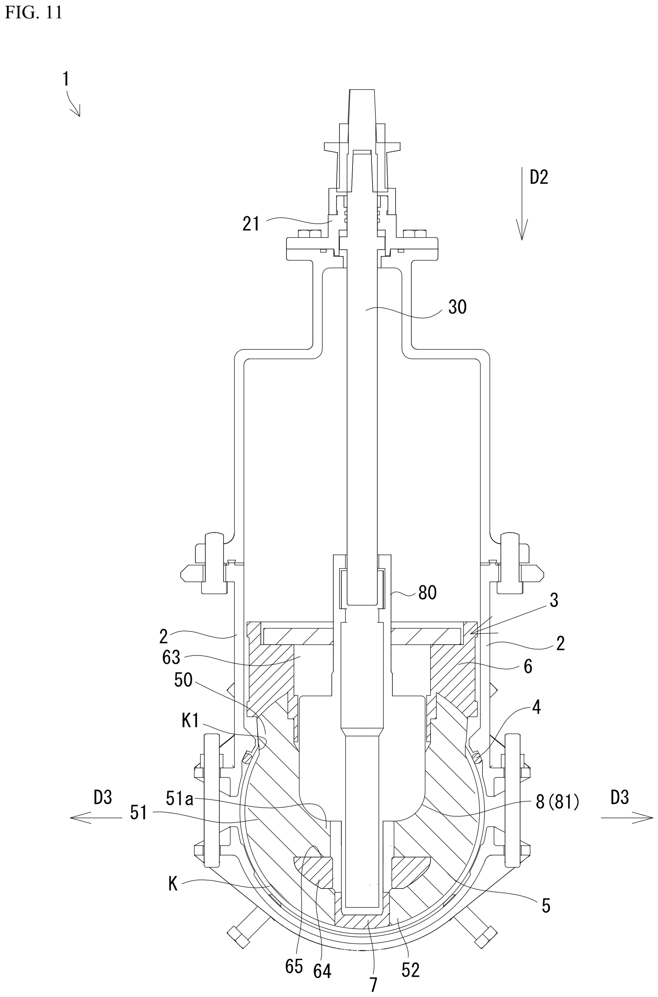

After the gap has been completely sealed by the second sealing portion 51, continuing to operate the valve shaft 30 causes the moving member 8 to move downward relative to the support member 6 while the support member 6 remains stationary. As illustrated in FIG. 11, the second sealing member 7 provided on the moving member 8 seals the communicating channel 53.

When opening valve body 3, moving member 8 moves relatively upward relative to support member 6, and the second sealing member 7 provided on moving member 8 moves from a state of closing communicating channel 53 to a state of releasing it. Furthermore, as the opening operation of the valve body 3 continues, the second sealing portion 51 undergoes a reduction in diameter. At this time, the communicating channel 53 opens before the deformation of the second sealing portion 51 occurs, enabling a smooth opening operation.

### <Second embodiment >

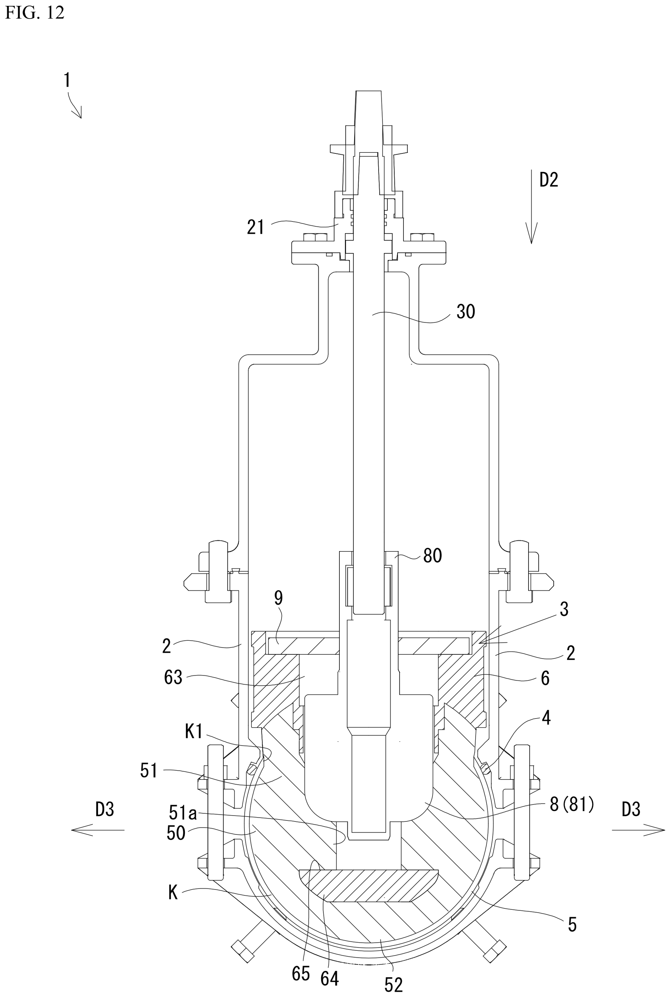

The second embodiment will be described with reference to FIG. 12. The second embodiment differs from the first embodiment in that a communicating channel 53 is not provided. Therefore, the moving member 8 does not close the communicating channel 53, and a second sealing member 7 is not provided. The other configurations are the same as in the first embodiment.

The operation of the valve device 1 in the second embodiment is described. The valve body 3, assembled by the above-described method for assembling the valve device 1, is inserted into the fluid pipe K, causing the first sealing portion 50 to adhere to the edge of the through-hole K1. Continuing to operate the valve shaft 30 causes the moving member 8 to advance further in the insertion direction D2 of the valve body 3. The moving member 8 presses against the first sealing member 5 and the support member 6, forcing the third sealing portion 52 against the bottom wall of the fluid pipe K. At this point, the fluid pipe K is not closed off, and the two lateral gaps of the second sealing portion 51 remain open, so the fluid flow is not stopped.

Continuing to operate the valve shaft 30, as illustrated in FIG. 12, the moving member 8 moves downward relative to the support member 6 while the support member 6 remains stationary, pressing the inner portion 51a of the second sealing portion 51 in the expansion direction D3 and the insertion direction D2 of the valve body 3. The inner portion 51a of the second sealing portion 51 is restricted from moving in the insertion direction D2 of the valve body 3 by the first restriction surface 65 of the pressing portion 64 of the support member 6.

Furthermore, the inner portion 51a of the second sealing portion 51 is sandwiched from both upstream and downstream of the valve body 3 by a pair of second restriction surfaces 66. Therefore, the second sealing portion 51 is easily deformed in the expansion direction D3. As illustrated in FIG. 10, the second sealing portion 51 deforms in the expansion direction D3, closing the gap that existed on the side of the valve body 3.

In this manner, by pressing the first sealing member 5 in the insertion direction D2 of the valve body 3 using the support member 6, the second sealing portion 51 is expanded in diameter, making deformation difficult. However, as described above, since pressing is performed using a separate moving member 8 distinct from the support member 6, appropriate deformation of the second sealing portion 51 becomes possible.

### <Modification>

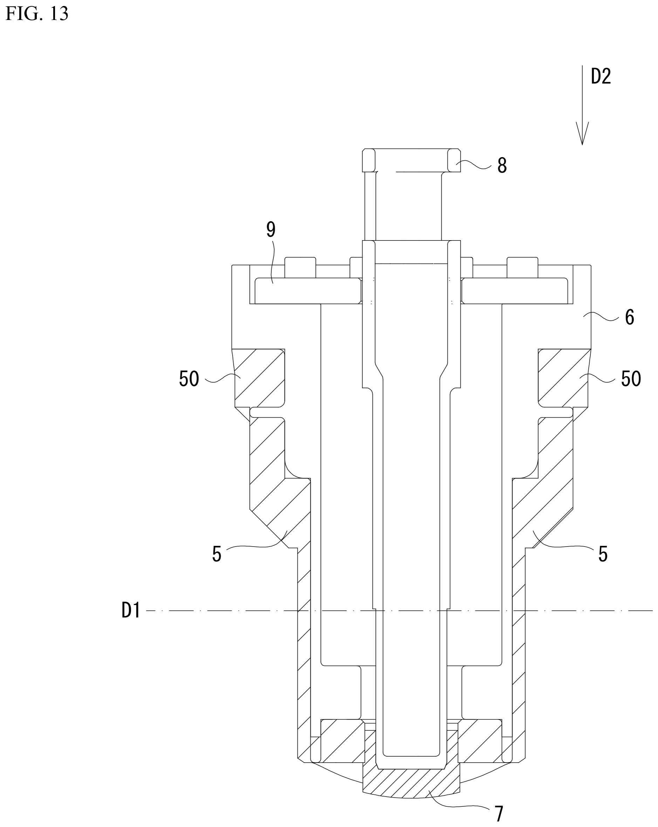

(A) In the above embodiment, the fluid pipe K is a water pipe, but it is not limited to this.
(B) In the above embodiment, the first sealing member 5 has a shape combining an annular portion and a U-shaped portion, and is configured to leave the support member 6 open upstream and downstream of the valve body 3 (i.e., not covered). However, the shape of the first sealing member 5 can be appropriately modified. For example, as illustrated in FIG. 13, the first sealing member 5 may cover the support member 6 from both the upstream and downstream sides of the valve body 3.
(C) In the above embodiment, the rubber hardness of the first sealing portion 50 is softer than at least a part of the rubber hardness of the second sealing portion 51, but this is not limited thereto. The hardness of the first sealing portion 50 and the second sealing portion 51 may be the same. Furthermore, the interface between the high-hardness region and the low-hardness region of the first sealing member 5 may be appropriately modified.

(1) As described above, although not particularly limited, as in the first and second embodiments, a valve device 1 may including: a valve body 3 that is insertable into a fluid pipe K through a through-hole K1 formed in the fluid pipe K, wherein the valve body 3 having: a first sealing member 5 has a first sealing portion 50 for sealing an edge of the through-hole K1 and a second sealing portion 51 that is deformable in an expansion direction D3 for sealing an inner wall of the fluid pipe K, wherein the expansion direction D3 is perpendicular to an insertion direction D2 of the valve body 3 and is directed outward in a pipe radial direction of the fluid pipe K; a support member 6 supports the first sealing member 5, and a moving member 8 is movable relative to the support member 6 in the insertion direction D2 of the valve body 3, wherein by the moving member 8 moving relative to the support member 6 in the insertion direction D2 of the valve body 3, the moving member 8 presses against the second sealing portion 51, thus causing the second sealing portion 51 to deform in the expansion direction D3, a communicating channel 53 that connects upstream and downstream of the valve body 3 is formed in the insertion direction D2 of the valve body 3 within the first sealing member 5, the communicating channel 53 is closed by the moving member 8 moving relative to the support member 6 in the insertion direction D2 of the valve body 3.

Even when the first sealing member 5 is pressed by the support member 6 in the insertion direction D2 of the valve body 3, deformation causing the second sealing portion 51 to expand in diameter is unlikely to occur. However, as described above, pressing with a separate moving member 8 enables appropriate deformation of the second sealing portion 51.

(2) The valve device 1 described in the above (1), wherein the first sealing member 5 may have a third sealing portion 52 for sealing an inner wall in the insertion direction D2 of the valve body 3 in the fluid pipe K, the support member 6 may have a pressing portion 64 that presses the third sealing portion 52 toward the insertion direction D2 of the valve body 3, and the pressing portion 64 may have a first restriction surface 65 that restricts a movement of an inner portion 51a of the second sealing portion 51 toward the insertion direction D2 of the valve body 3 caused by being pressed by the moving member 8.

According to this configuration, the second sealing portion 51 deforms more readily in the radial direction without deforming in the insertion direction D2 of the valve body 3, thereby enabling more effective sealing against the inner wall of the fluid pipe K by the second sealing portion 51.

(3) The valve device 1 described in the above (2), wherein the first sealing member 5 may be fixed to the pressing portion 64.

According to this configuration, during opening and closing of valve body 3, the first sealing member 5 can be prevented from detaching from support member 6 due to the influence of fluid pressure flowing from upstream to downstream in fluid pipe K.

(4) The valve device 1 described in any one of the above (1) to (3), wherein the support member 6 may have a pair of second restriction surfaces 66 that sandwich at least a part of the second sealing portion 51 from both upstream and downstream of the valve body 3, and the pair of second restriction surfaces 66 restricts deformation of the second sealing portion 51 toward upstream and downstream of the valve body 3.

According to this configuration, the second sealing portion 51 deforms in the expansion direction D3 without deforming upstream or downstream of the valve body 3, enabling more appropriate sealing against the inner wall of the fluid pipe K by the second sealing portion 51.

(5) The valve device 1 described in any one of the above (1) to (4), wherein the moving member 8 may have a second sealing member 7 that is formed separately from the first sealing member 5, and the second sealing member 7 closes the communicating channel 53.

According to this configuration, since the same sealing member as the first sealing member 5 is not deformed, it becomes easier to close the communicating channel 53.

(6) The valve device 1 described in the above (5), wherein
an opening (third opening 54) may be formed at an end of the valve body 3 in the insertion direction D2 within the first sealing member 5, that opens in three directions: upstream and downstream of the valve body 3 and in the insertion direction D2 of the valve body 3, and the opening forms the communicating channel 53.

A preferred embodiment for closing communicating channel 53.

(7) The valve device 1 described in any one of the above (1) to (6), wherein at least a part of the second sealing portion 51 is harder than the first sealing portion 50.

According to this configuration, sealing by the first sealing portion 50 and sealing by the second sealing portion 51 can be appropriately achieved.

(8) Although not particularly limited, as in the first and second embodiments, a method for installing a valve device 1 with inserting a valve body 3 into a fluid pipe K through a through-hole K1 formed in the fluid pipe K without interrupting fluid flow, the valve body 3 may have: a first sealing member 5 has a first sealing portion 50 for sealing an edge of the through-hole K1 and a second sealing portion 51 that is deformable in an expansion direction D3 for sealing an inner wall of the fluid pipe K, wherein the expansion direction D3 is perpendicular to an insertion direction of the valve body 3 and is directed outward in a pipe radial direction of the fluid pipe K; a support member 6 supports the first sealing member5 , and a moving member 8 is movable relative to the support member 6 in the insertion direction D2 of the valve body 3, wherein a communicating channel 53 that connects upstream and downstream of the valve body 3 is formed in the insertion direction D2 of the valve body 3 within the first sealing member 5, the method may include: inserting the valve body 3 into the fluid pipe K to bring the first sealing portion 50 into contact with the edge of the through-hole K1; moving the moving member 8 relative to the support member 6 in the insertion direction D2 of the valve body 3, pressing the second sealing portion 51 with the moving member 8 to deform the second sealing portion 51 toward the expansion direction D3; and after deformation of the second sealing portion 51, moving the moving member 8 further toward the insertion direction D2 of the valve body 3 relative to the support member 6 thereby closes the communicating channel 53.

(9) Although not particularly limited, as in the first and second embodiments, a method for assembling a valve device 1 with a valve body 3 that is insertable into a fluid pipe K through a through-hole K1 formed in the fluid pipe K, the method may include: supporting a first sealing member 5 by a support member 6, the first sealing member 5 has a first sealing portion 50 for sealing an edge of the through-hole K1 and a second sealing portion 51 that is deformable in an expansion direction D3 for sealing an inner wall of the fluid pipe K, wherein the expansion direction D3 is perpendicular to an insertion direction D2 of the valve body 3 and is directed outward in a pipe radial direction of the fluid pipe K; inserting a movable member 8that is movable relative to the support member 6 in the insertion direction D2 of the valve body 3, into an interior of the support member 6; and attaching a fixing member 9 to the support member 6 to prevent the moving member 8 from detaching from the support member 6.

While embodiments in accordance with the present invention have been described above with reference to the drawings, it should be understood that the specific constitution thereof is not limited to these embodiments. The scope of the present invention is as indicated by the claims and not merely as described at the foregoing embodiments, and moreover includes all variations within the scope of or equivalent in meaning to that which is recited in the claims.

Structure employed at any of the foregoing embodiment(s) may be employed as desired at any other embodiment(s). The specific constitution of the various components is not limited only to the foregoing embodiment(s) but admits of any number of variations without departing from the gist of the present invention.

### DESCRIPTION OF REFERENCE SIGNS

- 1: valve device
- 3: valve body
- 5: first sealing member
- 6: support member
- 7: second sealing member
- 8: moving member
- 9: fixing member
- 50: first sealing portion
- 51: second sealing portion
- 51a: inner portion
- 52: third sealing portion
- 53: communicating channel
- 64: pressing portion
- 65: first restriction surface
- 66: second restriction surface
- D2: insertion direction
- D3: expansion direction
- K: fluid pipe
- K1: through-hole

## Claims

1. A valve device comprising:
a valve body that is insertable into a fluid pipe through a through-hole formed in the fluid pipe, wherein the valve body having:
a first sealing member has a first sealing portion for sealing an edge of the through-hole and a second sealing portion that is deformable in an expansion direction for sealing an inner wall of the fluid pipe, wherein the expansion direction is perpendicular to an insertion direction of the valve body and is directed outward in a pipe radial direction of the fluid pipe;
a support member supports the first sealing member, and
a moving member is movable relative to the support member in the insertion direction of the valve body,
wherein by the moving member moving relative to the support member in the insertion direction of the valve body, the moving member presses against the second sealing portion, thus causing the second sealing portion to deform in the expansion direction,
a communicating channel that connects upstream and downstream of the valve body is formed in the insertion direction of the valve body within the first sealing member,
the communicating channel is closed by the moving member moving relative to the support member in the insertion direction of the valve body.

2. A valve device according to claim 1,
wherein the first sealing member has a third sealing portion for sealing an inner wall in the insertion direction of the valve body in the fluid pipe,
the support member has a pressing portion that presses the third sealing portion toward the insertion direction of the valve body, and
the pressing portion has a first restriction surface that restricts a movement of an inner portion of the second sealing portion toward the insertion direction of the valve body caused by being pressed by the moving member.

3. A valve device according to claim 2,
wherein the first sealing member is fixed to the pressing portion.

4. A valve device according to claim 1,
wherein the support member has a pair of second restriction surfaces that sandwich at least a part of the second sealing portion from both upstream and downstream of the valve body, and
the pair of second restriction surfaces restricts deformation of the second sealing portion toward upstream and downstream of the valve body.

5. A valve device according to claim 1,
wherein the moving member has a second sealing member that is formed separately from the first sealing member, and the second sealing member closes the communicating channel.

6. A valve device according to claim 5,
wherein an opening is formed at an end of the valve body in the insertion direction within the first sealing member, that opens in three directions:
upstream and downstream of the valve body and in the insertion direction of the valve body, and
the opening forms the communicating channel.

7. A valve device according to claim 1,
wherein at least a part of the second sealing portion is harder than the first sealing portion.

8. A method for installing a valve device with inserting a valve body into a fluid pipe through a through-hole formed in the fluid pipe without interrupting fluid flow, the valve body having:
a first sealing member has a first sealing portion for sealing an edge of the through-hole and a second sealing portion that is deformable in an expansion direction for sealing an inner wall of the fluid pipe, wherein the expansion direction is perpendicular to an insertion direction of the valve body and is directed outward in a pipe radial direction of the fluid pipe;
a support member supports the first sealing member, and
a moving member is movable relative to the support member in the insertion direction of the valve body, wherein a communicating channel that connects upstream and downstream of the valve body is formed in the insertion direction of the valve body within the first sealing member,
the method including:
inserting the valve body into the fluid pipe to bring the first sealing portion into contact with the edge of the through-hole;
moving the moving member relative to the support member in the insertion direction of the valve body, pressing the second sealing portion with the moving member to deform the second sealing portion toward the expansion direction; and
after deformation of the second sealing portion, moving the moving member further toward the insertion direction of the valve body relative to the support member thereby closes the communicating channel.

9. A method for assembling a valve device with a valve body that is insertable into a fluid pipe through a through-hole formed in the fluid pipe,
the method including:
supporting a first sealing member by a support member, the first sealing member has a first sealing portion for sealing an edge of the through-hole and a second sealing portion that is deformable in an expansion direction for sealing an inner wall of the fluid pipe, wherein the expansion direction is perpendicular to an insertion direction of the valve body and is directed outward in a pipe radial direction of the fluid pipe;
inserting a movable member that is movable relative to the support member in the insertion direction of the valve body , into an interior of the support member; and
attaching a fixing member to the support member to prevent the moving member from detaching from the support member.
